# EUROPÄISCHE PATENTSCHRIFT

(11) **EP 2 016 133 B1**
(45) Veröffentlichungstag und Bekanntmachung des Hinweises auf die Patenterteilung: **19.10.2011**
(21) Anmeldenummer: 07727323.3
(22) Anmeldetag: 26.03.2007
(51) Int. Cl.: C08L 75/08, F16G 1/08

(54) **FLACHRIEMEN**
FLAT BELT
COURROIE PLATE

(30) Priorität: 04.05.2006 DE 102006020633
(43) Veröffentlichungstag der Anmeldung: 21.01.2009
(73) Patentinhaber: ContiTech Antriebssysteme GmbH, 30165 Hannover (DE)
(72) Erfinder: BROCKE, Stephan, 22143 Hamburg (DE); GÖSER, Hubert, 29451 Dannenberg (DE)
(74) Vertreter: Finger, Karsten
(86) Internationale Anmeldenummer: PCT/EP2007/052850
(87) Internationale Veröffentlichungsnummer: WO 2007/128622

(56) Entgegenhaltungen:
- EP-A- 1 353 087
- DE-A1- 2 248 382
- DE-A1- 3 805 245
- US-A1- 2004 026 653

## Beschreibung

Die Erfindung betrifft einen Flachriemen, insbesondere einen Zuggurt für eine Aufzugsanlage, der zumindest einen nach außen weisenden Bereich aus einem thermoplastischen Polyurethan-Elastomer vom Polyether-Typ und eine aus Corden bestehende Zugträgerlage aufweist.

Flachriemen aus Polyurethan, die mit Zugträgerlagen aus metallischen oder nichtmetallischen Corden verstärkt sind, werden in der Aufzugtechnik als Zug- bzw. Hubgurte verwendet.

Derartige Gurte werden beispielsweise in der WO 99/43885 A1 und der EP 11 353 087 A1 beschrieben. Vorrichtungen und Verfahren zur Herstellung von Flachriemen aus Polyurethan sind aus der EP 1 353 087 A1 und der DE 102 22 015 A1 bekannt.

In der Offenlegungsschrift DE 2 248 382 A1 werden thermoplastische Polyurethane, ihre Herstellung sowie ihre Verwendung als Beschichtungsmittel, beispielsweise für die Beschichtung von Textilien, beschrieben. Diese thermoplastischen Polyurethane können dabei mikrokristalline Wachse als Additive enthalten.

Als Polyurethan werden für die Flachriemen in der Regel thermoplastische Polyurethan-Elastomere (TPU) als Polyurethane verwendet, die sich im Bereich der üblichen Gebrauchstemperaturen gummielastisch verhalten und sich aber bei höherer Temperatur wie Thermoplaste verarbeiten lassen. Die thermoplastische Verarbeitbarkeit ermöglicht bei den Flachriemen eine möglichst gute Durchdringung der Festigkeitsträger mit dem TPU bei der Herstellung. Im Gebrauch des fertigen Riemens gewährleistet das gummielastische Verhalten eine ausreichende Flexibilität.

TPU sind auf Basis von Polyetherdiolen, Polyesterdiolen oder Polyether-Carbonatdiolen mit Diisocyanaten und Kettenverlängerern auf Basis niedermolekularer di- (bzw. multi-) funktioneller Dialkohole oder Diamine linear blockartig aufgebaute Produkte. Die für TPU typischen Hartsegmente des Polymers werden dabei von den Umsetzungsprodukten der kurzkettigen Diole oder Diamine mit den Diisocyanaten gebildet, während die Weichsegmente von den polymeren Diolen gebildet werden.

Die Herstellung der TPU kann im One-Shot- oder im Prepolymer-Verfahren erfolgen.

Bei der Anwendung von Flachriemen in Aufzugsanlagen mit kraftschlüssigen Antrieben, ist es aus Sicherheitsgründen erforderlich, dass der Reibbeiwert (Reibungskoeffizient) zwischen Riemen und Traktionsscheibe (Antriebsscheibe) nicht zu hoch und nicht zu niedrig eingestellt wird. Ist der Reibbeiwert zu klein (µ < 0,15, bestimmt durch Reibbeiwertmessung gegen Stahl und errechnet nach der Eithelwein'schen Formel), kann es zu einem nicht gewünschten Durchrutschen der Fahrstuhlkabine kommen. Ist der Reibbeiwert dagegen zu groß (µ > 0,85), kann dies dazu führen, dass die zulässige Zugbelastung des Flachriemens überschritten werden kann. Ein für die Anwendung in Aufzugsanlagen bevorzugter Reibbeiwert liegt bei 0,3 bis 0,6.

Um den Reibbeiwert des Flachriemens mit der Traktionsscheibe zu beeinflussen, ist es möglich zumindest den Bereich des Flachriemens, der mit der Traktionsscheibe in Kontakt steht, aus unterschiedlichen TPU-Materialien bestehen zu lassen.

Es können für einen niedrigen Reibbeiwert spezielle TPU verwendet werden, die auf einem Polyesterdiol als Polyolbaustein basieren, so genannte TPU vom Polyester-Typ. Diese TPU weisen aber nachteilig eine geringe Hydrolysebeständigkeit auf und ihr Einsatz ist daher in Gebieten mit hoher Luftfeuchtigkeit oder feuchter Umgebung nur eingeschränkt möglich. Darüber hinaus weisen sie den Nachteil einer geringen Kälteflexibilität auf.

Benutzt man für den Flachriemen ein TPU vom Polyether-Typ, das auf einem Polyetherdiol als Polyolbaustein basiert, so erhält man hydrolysebeständige, kälteflexible Produkte. Allerdings weisen TPU vom Polyether-Typ einen deutlich höheren Reibbeiwert auf, welcher die Nutzung z. B. für Hubgurte in Aufzugsanlagen einschränkt.

Es ist in der Vergangenheit versucht worden, den Reibbeiwert des Flachriemens aus TPU vom Polyether-Typ dadurch zu reduzieren, dass dem TPU Wachse, Füllstoffe öder ähnliche Additive beigemischt werden. So wurden beispielsweise Kunststoffe wie ABS, PE oder HDPE in Anteilen von 1 bis 10 Gew.-% sowie diverse Wachse wie PE-Copolymer, Paraffin, Fettsäureamidester, z.B. Abrilube 77, in Anteilen von 0,1 bis 0,3 Gew.-% eingesetzt.

Die Additive hatten aber entweder nicht den gewünschten Einfluss auf den Reibbeiwert und/oder beeinflussten das Alterungsverhalten des TPU vom Polyether-Typ negativ. Gerade bei den Wachsen hat sich gezeigt, dass sich diese im Einsatzfall in undefinierter Menge auf der Oberfläche des Flachriemens abscheiden können und/oder u. U. sogar abgerieben oder abgewischt werden. Dadurch sind keine Riemen herstellbar, die über die gesamte Lebensdauer einheitliche Eigenschaften aufweisen. Der Reibbeiwert kann von sehr niedrigen zu sehr hohen Werten schwanken. Ferner kann der Riementrieb durch die heraus wandernden Substanzen verunreinigt und in seiner Funktion beeinträchtigt werden.

Der vorliegenden Erfindung liegt die Aufgabe zu Grunde, Flachriemen der eingangs genannten Art bereitzustellen, die einen gute Hydrolysebeständigkeit aufweisen und im Betrieb über die gesamte Lebensdauer einen konstanten, auf den Anwendungsfall optimierten Reibbeiwert aufweisen. Speziell beim Einsatz der Riemen als Zuggurte in Aufzugsanlagen sollte der Reibbeiwert für das Zusammenspiel des Riemens mit der Traktionsscheibe Werte aufweisen, die ein Durchrutschen der Fahrstuhlkabine oder eine Überschreiten der zulässigen Zugbelastung des Flachriemens verhindern.

Gelöst wird diese Aufgabe erfindungsgemäß dadurch, dass dem thermoplastischen Polyurethan-Elastomer ein oder mehrere isoparaffnische, ölarme Wachse beigemischt sind, wobei der Ölgehalt des Wachses maximal 1.5 % beträgt.

Überraschenderweise lässt sich durch derartige Wachse, die eine größere Menge an Isoparaffinen und eine geringe Menge an Ölen enthalten, der Reibbeiwert des Polyurethan-Elastomers vom Polyether-Typ derart reduzieren, dass der Flachriemen im Betrieb über die gesamte Lebensdauer einen konstanten, auf den Anwendungsfall optimierten Reibbeiwert aufweist. Hierbei zeigt der Flachriemen gleichzeitig eine gute Hydrolysebeständigkeit und Kälteflexibilität.

Insbesondere beim Einsatz der Flachriemen als Zuggurte in Aufzugsanlagen weisen die erfindungsgemäßen Riemen Reibbeiwerte für das Zusammenspiel des Riemens mit der Traktionsscheibe auf, die ein Durchrutschen der Fahrstuhlkabine oder eine Überschreiten der zulässige Zugbelastung des Flachriemens verhindern. Das dem TPU vom Polyether-Typ erfindungsgemäß beigemischte Wachs sorgt dafür, dass die Traktionskraft im einem ersten Schritt von der Antriebsscheibe auf das Riemenmantelmaterial und auch noch in einem zweiten Schritt auf die Zugträger übertragen wird. Das paraffinische, ölarme Wachs sorgt also auch für eine außerordentlich gute Anbindung des TPU vom Polyether-Typ an die Zugträger, welche über die gesamte Lebensdauer des Riemens erhalten bleibt.

Der Flachriemen kann in seiner Gesamtheit aus dem TPU vom Polyether-Typ mit dem erfindungsgemäß beigemischten Wachs aufgebaut sein und eingebettet darin die Zugträgerlage enthalten. Es ist aber auch möglich, dass der Flachriemen das TPU vom Polyether-Typ mit dem erfindungsgemäß beigemischten Wachs nur in dem Bereich aufweist, der mit der Traktionsscheibe und gegebenenfalls zusätzlich mit den Zugträgern in Kontakt kommt. Die anderen Bereiche des Flachriemens können dann aus anderen thermoplastischen Elastomeren oder Elastomeren bestehen. Ein Flachriemen aus zwei unterschiedlichen TPU kann beispielsweise aus zwei Teilriemen gemäß der DE 102 22 015 A1 hergestellt werden.

Eine Weiterbildung der Erfindung sieht vor, dass das thermoplastische Polyurethan-Elastomer das oder die Wachse in einem Konzentrationsbereich von 0,01 bis 0,35 Gew.-%, vorzugsweise von 0,05 bis 0,25 Gew.-%, enthält. Dadurch lässt sich der Reibbeiwert je nach Anwendungsfall des Flachriemens in gewünschter Weise einstellen.

Eine Weiterbildung der Erfindung sieht vor, dass der Ölgehalt (bestimmt nach DN ISO 2908) des beigemischten Wachses maximal 1 % beträgt. Dadurch wird eine unerwünschte, den Reibbeiwert negativ beeinflussende Migration der niedrigere Molekulargewichte aufweisenden Öle in das TPU deutlich vermindert.

Vorzugsweise ist das erfindungsgemäß beigemischte Wachs ein Mikrowachs, in dem die iso-Alkane gegenüber den n-Alkanen dominieren.

Eine vorteilhafte Ausgestaltung der Erfindung sieht weiterhin vor, dass das Wachs aus 0 bis 100%, vorzugsweise 50 bis 95 %, einer niedrigschmelzenden Variante des Wachses und 0 bis 100 %, vorzugsweise 5 bis 50 %, einer hochschmelzenden Variante des Wachses besteht. Dadurch lässt sich der Reibbeiwert je nach Anwendungsfall des Flachriemens in gewünschter Weise abstimmen. Hauptfaktor für die Einstellung des Reibbeiwerts bleibt aber - wie bereits genannt - der vorgebbare Gehalt an Wachs im thermoplastischen Polyurethan-Elastomer.

Vorteilhaft weist hierbei die niedrigschmelzende Variante einen Erstarrungspunkt zwischen 55 und 70 °C, vorzugsweise zwischen 62 und 66 °C, und die hochschmelzende Variante einen Erstarrungspunkt zwischen 80 und 95 °C, vorzugsweise zwischen 84 und 88 °C, auf.

Als besonders vorteilhaft hat sich herausgestellt, wenn die Dichte des beigemischten Wachses zwischen 770 und 810 kg/m³, vorzugsweise zwischen 780 und 800 ka/m³, besonders bevorzugt 785 bis 795 kg/m³, beträgt.

Eine Weiterbildung sieht vor, dass das Wachs dem thermoplastischen Polyurethan-Elastomer in Form eines hochkonzentrierten Masterbatches beimischbar ist. Aufgrund des niedrigen Schmelzpunktes und der geringen Mengen ist die Beimischung des Wachses vorteilhaft auch während der Herstellung des TPU vom Polyether-Typ möglich.

### Ausführungsbeispiel:

Die Flachriemen können nach bekannten Verfahren durch Extrusion des TPU auf die Zugträgerlage und anschließende Aushärtung hergestellt werden. Das Wachs wird dem TPU vorzugsweise vor der Extrusion beigemischt. Als besonders geeignet, hat sich hierbei ein hydriertes Mikrowachs der Shell AG herausgestellt, welches unter der Bezeichnung "Shell Compound MW 164" vertrieben wird.

## Patentansprüche

1. Flachriemen, insbesondere Zuggurt für eine Aufzugsanlage, der zumindest einen nach außen weisenden Bereich aus einem thermoplastischen Polyurethan-Elastomer vom Polyether-Typ und eine aus Corden bestehende Zugträgerlage aufweist,
**dadurch gekennzeichnet, dass** dem thermoplastischen Polyurethan-Elastomer ein oder mehrere isoparaffinische, ölarme Wachse beigemischt sind, wobei der Ölgehalt des Wachses maximal 1.5 % beträgt.

2. Flachriemen nach Anspruch 1, **dadurch gekennzeichnet, dass** das thermoplastische Polyurethan-Elastomer das oder die Wachse in einem Konzentrationsbereich von 0,01 bis 0,35 Gew.-%, vorzugsweise von 0,05 bis 0,25 Gew.-%, enthält.

3. Flachriemen nach Anspruch 1 oder 2, **dadurch gekennzeichnet, dass** der Ölgehalt des Wachses maximal 1 % beträgt.

4. Flachriemen nach einem der Ansprüche 1 bis 3, **dadurch gekennzeichnet, dass** das Wachs ein Mikrowachs ist.

5. Flachriemen nach einem der Ansprüche 1 bis 4, **dadurch gekennzeichnet, dass** das Wachs aus 0 bis 100%, vorzugsweise 50 bis 95 %, einer niedrigschmelzenden Variante des Wachses und 0 bis 100 %, vorzugsweise 5 bis 50 %, einer hochschmelzenden Variante des Wachses besteht.

6. Flachriemen nach Anspruch 4, **dadurch gekennzeichnet, dass** die niedrigschmelzende Variante einen Erstarrungspunkt zwischen 55 und 70 °C, vorzugsweise zwischen 62 und 66 °C, und die hochschmelzende Variante einen Erstarrungspunkt zwischen 80 und 95 °C, vorzugsweise zwischen 84 und 88 °C, aufweist.

7. Flachriemen nach einem der Ansprüche 1 bis 6, **dadurch gekennzeichnet, dass** die Dichte des Wachses zwischen 770 und 810 kg/m³, vorzugsweise zwischen 780 und 800 kg/m³, besonders bevorzugt 785 bis 795 kg/m³, beträgt.

8. Flachriemen nach einem der Ansprüche 1 bis 7, **dadurch gekennzeichnet, dass** das Wachs dem thermoplastischen Polyurethan-Elastomer in Form eines hochkonzentrierten Masterbatches beimischbar ist.

## Claims

1. Flat belt, more particularly traction belt for a lift system, said flat belt including at least an outwardly facing region of a thermoplastic polyurethane elastomer of the polyether type and a traction element ply consisting of cords, **characterized in that** the thermoplastic polyurethane elastomer is admixed with one or more isoparaffinic low-oil waxes, wherein the oil content of the wax is not more than 1.5%.

2. Flat belt according to Claim 1, **characterized in that** the thermoplastic polyurethane elastomer contains the wax or waxes in a concentration range from 0.01% to 0.35% by weight and preferably of 0.05% to 0.25% by weight.

3. Flat belt according to Claim 1 or 2, **characterized in that** the oil content of the wax is not more than 1%.

4. Flat belt according to any one of Claims 1 to 3, **characterized in that** the wax is a microwax.

5. Flat belt according to any one of Claims 1 to 4, **characterized in that** the wax consists of a low-melting variant of the wax to an extent of from 0 to 100% and preferably 50 to 95% and of a high-melting variant of the wax to an extent of from 0 to 100% and preferably 5 to 50%.

6. Flat belt according to Claim 4, **characterized in that** the low-melting variant has a solidification point between 55 and 70°C and preferably between 62 and 66°C and the high-melting variant has a solidification point between 80 and 95°C and preferably between 84 and 88°C.

7. Flat belt according to any one of Claims 1 to 6, **characterized in that** the density of the wax is between 770 and 810 kg/m³, preferably between 780 and 800 kg/m³ and more preferably 785 to 795 kg/m³.

8. Flat belt according to any one of Claims 1 to 7, **characterized in that** the wax is admixable to the thermoplastic polyurethane elastomer in the form of a highly concentrated master batch.

## Revendications

1. Courroie plate, en particulier courroie de traction pour installation d'ascenseur, présentant au moins une partie, tournée vers l'extérieur, en un élastomère thermoplastique de polyuréthane de type polyéther, et une couche de renfort de traction constituée de câbles,
**caractérisée en ce que**
une ou plusieurs cires isoparaffiniques à faible teneur en huile, dont la teneur en huile est d'au plus 1,5 %, sont mélangées à l'élastomère thermoplastique de polyuréthane.

2. Courroie plate selon la revendication 1, **caractérisée en ce que** l'élastomère thermoplastique de polyuréthane contient la ou les cires dans une plage de concentration de 0,01 à 0,35 % en poids et de préférence de 0,05 à 0,25 % en poids.

3. Courroie plate selon les revendications 1 ou 2, **caractérisée en ce que** la teneur en huile de la cire est d'au plus 1 %.

4. Courroie plate selon l'une des revendications 1 à 3, **caractérisée en ce que** la cire est une micro-cire.

5. Courroie plate selon l'une des revendications 1 à 4, **caractérisée en ce que** la cire est constituée de 0 à 100 %, de préférence de 50 à 95 % d'une variante à bas point de fusion de la cire et de 0 à 100 % et de préférence de 5 à 50 % d'une variante à haut point de fusion de la cire.

6. Courroie plate selon la revendication 4, **caractérisée en ce que** le point de solidification de la variante à bas point de fusion est compris entre 55 et 70°C et de préférence entre 62 et 66°C et **en ce que** le point de solidification de la variante à haut point de fusion est compris entre 80 et 95°C et de préférence entre 84 et 88°C.

7. Courroie plate selon l'une des revendications 1 à 6, **caractérisée en ce que** la masse spécifique de la cire est comprise entre 770 et 810 kg/m³, de préférence entre 780 et 800 kg/m³ et de façon particulièrement préférable entre 785 et 795 kg/m³.

8. Courroie plate selon l'une des revendications 1 à 7, **caractérisée en ce que** la cire peut être mélangée à l'élastomère thermoplastique de polyuréthane sous la forme d'une charge-mère à haute concentration.
